# EUROPEAN PATENT APPLICATION

(11) **EP 4 415 091 A1**
(43) Date of publication of application: **14.08.2024**
(21) Application number: 23218425.9
(22) Date of filing: 20.12.2023
(51) Int. Cl.: H01M 10/04, H01M 10/0587, H01M 50/417, H01M 50/446, H01M 50/46

(54) **ELECTRICITY STORAGE DEVICE AND METHOD OF MANUFACTURING ELECTRICITY STORAGE DEVICE**

(30) Priority: 08.02.2023 JP 2023017763
(71) Applicant: Prime Planet Energy & Solutions, Inc., Chuo-ku Tokyo 103-0022 (JP)
(72) Inventor: ISEDA, Taisuke, Tokyo, 103-0022 (JP); NISHIDA, Akira, Tokyo, 103-0022 (JP)
(74) Representative: Kuhnen & Wacker Patent- und Rechtsanwaltsbüro PartG mbB

(57) **Abstract**

Provided is a technology that can obtain an electricity storage device including a wound electrode body with high productivity. In an aspect of the electricity storage device disclosed herein, the separator 26 has a first adhesive layer 1A and a second adhesive layer 1B on at least one surface of the separator. In plan view of the separator 26, the first adhesive layer 1A is partially formed, and the second adhesive layer 1B is partially formed. The first adhesive layer 1A is composed of an adhesive layer that exhibits adhesiveness to the positive electrode 22 by contacting the positive electrode 22 facing the first adhesive layer 1A at ordinary temperature. The second adhesive layer 1B is composed of an adhesive layer that has no adhesiveness to the positive electrode 22 when the first adhesive layer 1A adheres to the facing positive electrode 22, and thereafter exhibits adhesiveness to the positive electrode 22 when some physical means is applied.

## Description

### BACKGROUND OF THE DISCLOSURE

### 1. Technical Field

The present disclosure relates to an electricity storage device and a method of manufacturing the electricity storage device. 2. Background

For example, Japanese Patent No. 5328034 discloses a battery including a wound electrode body that has a positive electrode, a negative electrode and a separator, in which a heat-resistant porous layer containing an adhesive resin is provided on the surface of the separator. Such a wound electrode body is described as being produced by arranging and winding the positive electrode and the negative electrode so that these electrodes overlap each other with the separator interposed therebetween, and then pressing them into a flat shape.

### SUMMARY

According to the studies conducted by the inventors, it has been found that strong adhesion between the separator having the adhesive resin as described above and an electrode when winding respective members may lead to inappropriate change in the positional relationship between the separator and the electrode when pressing and deforming the wound body. This may cause distortion, wrinkles, etc. in the separator.

In contrast, if the separator does not have such an adhesive resin, the winding of the wound body may be misaligned, which is not desirable from the viewpoint of productivity and the like. That is, it has been seen that there is still room for improvement in terms of productivity in the electricity storage device (e.g., battery) including the wound electrode body having the adhesive layer described above and the manufacturing of the electricity storage device.

The present disclosure has been made in view of such circumstances, and a main obj ect thereof is to provide a technology that can obtain an electricity storage device including a wound electrode body with high productivity.

To achieve such an object, the present disclosure provides a method of manufacturing an electricity storage device including a wound electrode body having a flat shape, the wound electrode body including a first electrode having a strip shape, a second electrode having a strip shape, and a separator having a strip shape, the first electrode and the second electrode being wound with the separator interposed therebetween. Such a manufacturing method of the electricity storage device includes the steps of winding the first electrode and the second electrode with the separator interposed therebetween to produce a wound body; and after the winding step, pressing the wound body to form a wound electrode body having a flat shape, wherein the separator used in the winding step has a first adhesive layer and a second adhesive layer on at least one surface of the separator, wherein in plan view of the separator, the first adhesive layer is partially formed, and the second adhesive layer is partially formed, wherein a main component of a resin constituting the first adhesive layer and a main component of a resin constituting the second adhesive layer are different from each other, and wherein under a temperature condition in the winding step, adhesiveness of the second adhesive layer to the first electrode is lower than adhesiveness of the first adhesive layer to the first electrode. Although the details will be described later, according to the method of manufacturing the electricity storage device with such an arrangement, the electricity storage device including the wound electrode body can be manufactured with high productivity.

According to another aspect, the present disclosure provides an electricity storage device including a wound electrode body having a flat shape, the wound electrode body including a first electrode having a strip shape, a second electrode having a strip shape, and a separator having a strip shape, the first electrode and the second electrode being wound with the separator interposed therebetween, wherein the separator has a first adhesive layer and a second adhesive layer on at least one surface of the separator, wherein in plan view of the separator, the first adhesive layer is partially formed, and the second adhesive layer is partially formed, wherein the first adhesive layer includes an adhesive layer that exhibits adhesiveness to the first electrode by contacting the first electrode facing the first adhesive layer at ordinary temperature, and wherein the second adhesive layer includes an adhesive layer that has no adhesiveness to the first electrode when the first adhesive layer adheres to the facing first electrode, but thereafter exhibits adhesiveness to the first electrode when a physical process is applied. Such an electricity storage device is manufactured by the method of manufacturing an electricity storage device as described above and thus can be said to be an electricity storage device that is obtained with high productivity.

### BRIEF DESCRIPTION OF THE DRAWINGS

FIG. 1 is a flowchart for explaining a method of manufacturing a battery according to one embodiment.
FIG. 2 is a schematic diagram for explaining a winding step according to the embodiment.
FIG. 3 is a schematic diagram illustrating a wound body prior to a pressing step according to the embodiment.
FIG. 4 is a schematic diagram illustrating the wound body obtained after the pressing step according to the embodiment.
FIG. 5 is a schematic diagram illustrating a configuration of a separator according to the embodiment.
FIG. 6 is a schematic diagram illustrating a state of the separator prior to the winding step according to the embodiment.
FIG. 7 is a schematic diagram illustrating a state of the separator after the winding step according to the embodiment.
FIG. 8 is a schematic diagram illustrating a state of the separator after the pressing step according to the embodiment.
FIG. 9 is a perspective view schematically illustrating the battery according to the embodiment.
FIG. 10 is a schematic longitudinal-sectional view taken along the line II-II in FIG. 9.
FIG. 11 is a schematic longitudinal-sectional view taken along the line III-III in FIG. 9.
FIG. 12 is a schematic cross-sectional view along the line IV-IV in FIG. 9.
FIG. 13 is a perspective view schematically illustrating a wound electrode body attached to a sealing plate.
FIG. 14 is a perspective view schematically illustrating the wound electrode body with a positive-electrode second current collector and a negative-electrode second current collector attached thereto.
FIG. 15 is a schematic diagram illustrating a configuration of the wound electrode body of the battery according to the embodiment.
FIG. 16 is an enlarged diagram schematically illustrating interfaces between the positive electrode and the separator and between the negative electrode and the separator according to the embodiment.
FIG. 17 is a diagram corresponding to FIG. 5, according to a second embodiment.
FIG. 18 is a diagram corresponding to FIG. 5, according to a third embodiment.
FIG. 19 is a diagram corresponding to FIG. 5, according to a fourth embodiment.
FIG. 20 is a diagram corresponding to FIG. 5, according to a fifth embodiment.

### DESCRIPTION OF THE EMBODIMENTS

Hereinafter, some embodiments of the technology disclosed herein will be described with reference to the accompanying figures. Obviously, the following description is not intended to limit the technology disclosed herein to the following embodiments. In the figures below, members and portions having the same action are labeled with the same reference signs as appropriate. In addition, the dimensional relationships (length, width, thickness, etc.) in each drawing do not reflect the actual dimensional relationships. Matters other than those specifically mentioned herein that are necessary for implementing the technology disclosed herein (e.g., general configuration and manufacturing processes of batteries that do not characterize the present invention) may be understood as design matters for those skilled in the art based on the prior art technologies in the field. The technology disclosed herein can be implemented based on the contents disclosed herein and the technical common sense in the field. The notation "Ato B" herein indicating a range means the meaning "A or more and B or less" and also implies the meaning of "more than A" and "less than B".

The "electricity storage device" as used herein refers to a device that can conduct charging and discharging. The electricity storage device encompasses batteries such as primary batteries and secondary batteries (e.g., lithium-ion secondary batteries, nickel-metal hydride batteries), and capacitors (physical batteries) such as electric double-layer capacitors. An electrolyte may be any of a liquid electrolyte (electrolyte solution), gel electrolyte, and solid electrolyte.

### <Method of Manufacturing Battery>

The present technology will be described below by using, as an example, a method of manufacturing a lithium-ion secondary battery (hereinafter simply referred to as a "battery 100"), which is one embodiment of the electricity storage device disclosed herein. Although a case where a first electrode is a positive electrode 22 and a second electrode is a negative electrode 24 will be described below, the technology disclosed herein can be applied, for example, to a case where the first electrode is the negative electrode 24 and the second electrode is the positive electrode 22. In the following, a description will be given by focusing on a wound electrode body 20a, but the same goes for wound electrode bodies 20b and 20c.

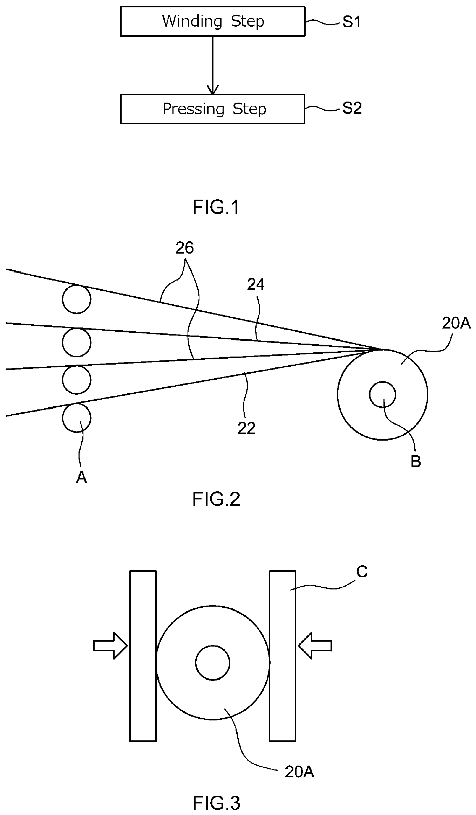

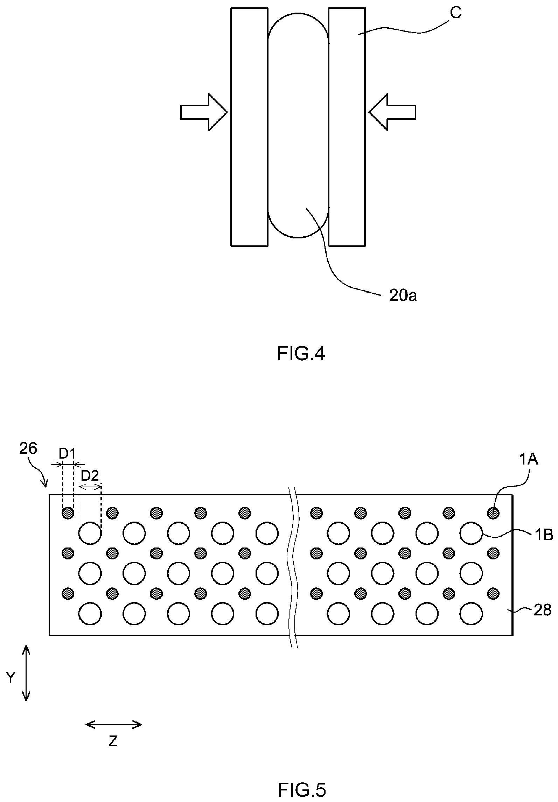

FIG. 1 is a flowchart for explaining a method of manufacturing the battery 100 according to a present embodiment. The battery 100 here includes the wound electrode bodies 20a, 20b, and 20c having a flat shape. Each of the wound electrode bodies 20a, 20b, and 20c includes the positive electrode 22 having a strip shape, the negative electrode 24 having a strip shape, and a separator 26 having a strip shape, the positive electrode 22 and the negative electrode 24 being wound with the separator 26 interposed therebetween. FIG. 5 is a schematic diagram illustrating a configuration of the separator according to the present embodiment. As illustrated in FIG. 1, the method of manufacturing a battery according to the present embodiment includes: a winding step (step S1) of winding the positive electrode 22 and the negative electrode 24 with the separator 26 interposed therebeween to produce a wound body 20A; and a pressing step (step S2) of pressing the wound body 20A to form the wound electrode bodies 20a having the flat shape after the winding step. The separator 26 used in the winding step has a first adhesive layer 1A and a second adhesive layer 1B on at least one surface of the separator 26. As illustrated in FIG. 5, in the plan view of the separator 26, the first adhesive layer 1A is partially formed, and the second adhesive layer 1B is partially formed. A main component of a resin constituting the first adhesive layer 1A and a main component of a resin constituting the second adhesive layer 1B are different from each other. Here, the main component can mean, for example, a component the content of which is, for example, 50% by volume or more, 60% by volume or more, 70% by volume or more, 80% by volume or more, 90% by volume or more, or 95% by volume or more (or may be even 100% by volume) when the content of the whole resin constituting the first adhesive layer 1A (second adhesive layer 1B) is assumed to be 100% by volume. Under the temperature condition in the winding step, the adhesiveness of the second adhesive layer 1B to the positive electrode 22 is lower than the adhesiveness of the first adhesive layer 1A to the positive electrode 22.

According to the method of manufacturing the battery 100 as described above, in the winding step, the positive electrode 22 and the separator 26 do not adhere to each other strongly, but in the pressing step, the positive electrode 22 and the separator 26 adhere to each other strongly. Therefore, in the pressing step, the positional relationship between the positive electrode 22 and the separator 26 changes appropriately when this relationship changes. This can suitably suppress occurrence of wrinkles or the like in the separator 26. Because the separator 26 has the adhesive layer (first adhesive layer 1A and second adhesive layer 1B), the misalignment of winding of the wound body 20A can be suitably prevented (specifically, the misalignment as used herein means the misalignment between the separator 26 and the positive electrode 22 within the wound body 20A to be described later, which easily occurs particularly when pulling out the wound body 20A from a winding core B, or the misalignment of winding when transporting up to a site of the pressing step to be described later). That is, according to the method of manufacturing the battery 100 described above, the battery 100 having the wound electrode bodies 20a, 20b, and 20c can be obtained with high productivity. Hereinafter, each step will be described.

### (Step S1: Winding Step)

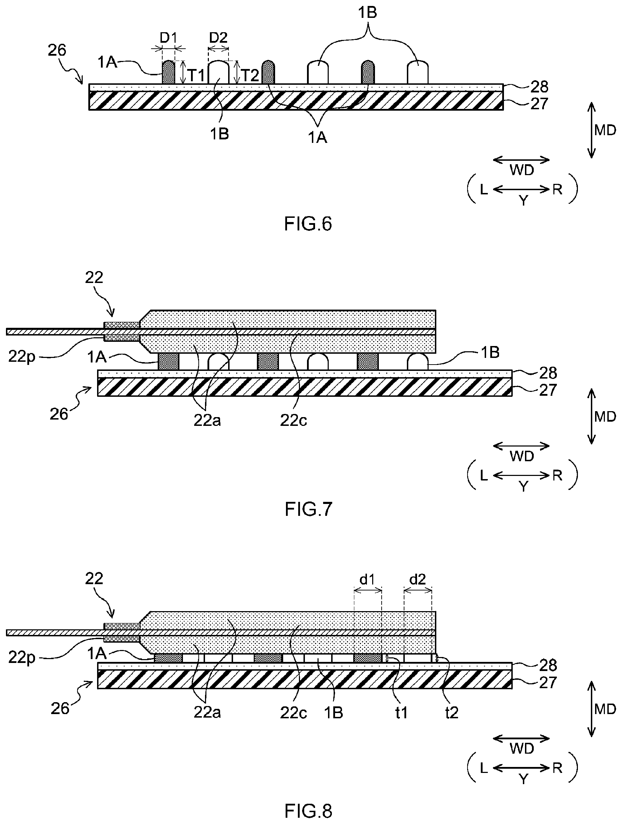

As described above, in the present step, the positive electrode 22 and the negative electrode 24 are wound with the separator 26 interposed therebetweeh to produce the wound body 20A. Here, FIG. 2 is a schematic diagram for explaining the winding step according to the present embodiment. FIG. 5 is a schematic diagram illustrating a configuration of the separator according to the present embodiment. FIG. 6 is a schematic diagram illustrating a state of the separator prior to the winding step according to the present embodiment. It is noted that in FIG. 6, only one separator 26 and the positive electrode 22 are illustrated for ease of explanation, but the same effect can be obtained from the other separator 26 and the positive electrode 22. The same goes for FIGS. 7 and 8 to be described later. First, the strip-shaped separator 26, the strip-shaped positive electrode 22, and the strip-shaped negative electrode 24 are prepared. As illustrated in FIG. 5, in the present embodiment, the separator used here is the separator 26 that has the first adhesive layer 1A and the second adhesive layer 1B on one surface of the separator 26. As such a separator, a commercially available separator having the first adhesive layer 1A and the second adhesive layer 1B formed on the surface of the separator 26 in advance may be used, or a separator 26 that has the first adhesive layer 1A and the second adhesive layer 1B formed on its surface by gravure printing, inkjet printing, or the like may be used. In the latter case, it is preferable to include a coating step of coating at least one of the surfaces of the separator 26 with an adhesive layer (here, the first adhesive layer 1A and the second adhesive layer 1B) by using a coating device prior to the winding step. Such a coating step is preferably performed immediately before the winding step, for example, from the viewpoint of suitably suppressing the adsorption of foreign matter or the like in the formed adhesive layer.

As for the first adhesive layer 1A and the second adhesive layer 1B as described above, under the temperature condition in the winding step, the adhesiveness (adhesive force) of the second adhesive layer 1B to the positive electrode 22 is lower than the adhesiveness (adhesive force) of the first adhesive layer 1A to the positive electrode 22. Here, the temperature in the winding step is preferably 50°C or lower, more preferably 40°C or lower, and even more preferably 35°C or lower. The winding step is preferably performed at a temperature of 10°C or higher. By making the adhesiveness (adhesive force) of the second adhesive layer 1B to the positive electrode 22 lower than the adhesiveness (adhesive force) of the first adhesive layer 1A to the positive electrode 22 under such a temperature condition, the strong adhesion between the separator 26 and the positive electrode 22 can be suitably suppressed in the winding step, so that the positional relationship between the positive electrode 22 and the separator 26 can be appropriately changed in the pressing step to be described later.

It is noted that the adhesiveness (adhesive force) of the first adhesive layer 1A (second adhesive layer 1B) to the first electrode (here, the positive electrode 22) under the temperature condition in the winding step can be set to a value measured, for example, in the following way. Specifically, the adhesiveness (adhesive force) can be a peel strength determined by performing a 90° peel test between the separator 26 having the first adhesive layer 1A (the separator 26 having the second adhesive layer 1B) and the first electrode (here, the positive electrode 22) when a pressing force (e.g., about 0.01 MPa to 0.1 MPa) is applied at the temperature of the winding step. The adhesive force (peel strength) of the first adhesive layer 1 Ato the first electrode (here, the positive electrode 22) is not particularly limited, but can be, for example, 0.00001 N/20mm to 0.1 N/20mm (preferably, 0.0001 N/20mm to 0.01 N/20mm). The adhesive force (peel strength) of the second adhesive layer 1B to the first electrode (here, the positive electrode 22) can be, for example, 0 N/20mm to 0.00001 N/20mm (preferably, 0 N/20mm to 0.000001 N/20mm). A difference between the adhesive force (peel strength) of the first adhesive layer 1A to the first electrode (here, the positive electrode 22) and the adhesive force (peel strength) of the second adhesive layer 1B to the first electrode (here, the positive electrode 22) in the winding step is, for example, 0.00001 N/20mm to 0.1 N/20mm (preferably, 0.0001 N/20mm to 0.01 N/20mm). Such a peel test can be performed, for example, by the following method. First, the separator 26 having the first adhesive layer 1A (second adhesive layer 1B) and the first electrode (here, the positive electrode 22) are each cut out into a piece with the size of a length of 2.0 cm and a width of 7.0 cm. These cut separator 26 and positive electrode 22 are then arranged to overlap each other. Next, the separator 26 and positive electrode 22 are bent so as to form an angle of 90° therebetween. Then, by using a tensile tester or the like, one side of the separator 26 and one side of the positive electrode 22 which are opened at 90° are grasped and pulled at a tensile speed of 50 mm/min, and thus the strength between the separator 26 and the positive electrode 22 is measured when both of them are peeled apart. In this way, the peel strength can be measured. It is noted that the peel strength of the second adhesive layer 1B before and after the pressing step described later can also be measured in the same method by using the positive electrode 22 and the separator 26 having the second adhesive layer 1B.

As described above, the main component of the resin constituting the first adhesive layer 1A and the main component of the resin constituting the second adhesive layer 1B are different from each other. The first adhesive layer 1A and the second adhesive layer 1B contain adhesive binders. Examples of adhesive binders include acrylic resins, fluorine resins, rubber resins, urethane resins, silicone resins, epoxy resins, and combinations thereof. An example of a rubber resin is styrene-butadiene rubber (SBR). Fluorine resins and acrylic resins are also preferable because of their high flexibility and more favorable adhesiveness to the first electrode (here, the positive electrode 22). Examples of fluorine resins include polyvinylidene fluoride (PVdF), polytetrafluoroethylene (PTFE), and the like. The type of the adhesive binder may be the same as or different from the heat-resistant layer binder. The first adhesive layer 1A and the second adhesive layer 1B are preferably composed mainly of adhesive binders. When the total content of the first adhesive layer 1A (second adhesive layer 1B) is assumed to be 100% by volume, the proportion of the adhesive binder is, for example, 50% by volume or more, or 60% by volume or more, preferably 70% by volume or more, more preferably 80% by volume or more, and even more preferably 90% by volume or more. Thus, predetermined adhesiveness to the positive electrode 22 can be exhibited reliably, and the separator 26 can be deformed easily by press forming.

Here, in order to make the adhesiveness of the second adhesive layer 1B to the positive electrode 22 lower than the adhesiveness of the first adhesive layer 1A to the positive electrode 22 under the temperature condition in the winding step, the glass transition point of the resin constituting the first adhesive layer 1A is preferably lower than the glass transition point of the resin constituting the second adhesive layer 1B. The glass transition point of the resin constituting the first adhesive layer 1A is not limited thereto, but is, for example, 0°C or lower, and preferably -10°C or lower. The glass transition point of the resin constituting the first adhesive layer 1A may be, for example, -20°C or higher. Meanwhile, the glass transition point of the resin constituting the second adhesive layer 1B is, for example, ordinary temperature or higher, preferably 30°C or higher, and more preferably 40°C or higher, or 50°C or higher. The glass transition point of the resin constituting the second adhesive layer 1B may be, for example, 60°C or lower. The glass transition point can be measured based on a method specified in, for example, JIS K 7121. Examples of the resin constituting the first adhesive layer 1A include PVdF, SBR, acrylic resins, and the like, which have a low glass transition point as described above. The resin constituting the second adhesive layer 1B preferably has a glass transition point of, for example, ordinary temperature or higher. Examples of such a resin include PVdF, acrylic resins, epoxy resins, and the like, which have a high glass transition point as described above. From the viewpoint of ease of handling, the first adhesive layer 1A and the second adhesive layer 1B preferably have adherence at ordinary temperature (e.g., about 25°C). Here, the adherence (adhesiveness) can mean, for example, a peel strength of 0.00001 N/20mm to 0.1 N/20mm (preferably 0.0001 N/20mm to 0.01 N/20mm) in a 90° peel test based on JIS Z 0237:2009.

In addition to the adhesive binder, the first and second adhesive layers 1A and 1B may contain other materials (e.g., inorganic fillers such as alumina, titania, and boehmite). When the first and second adhesive layers 1A and 1B contain an inorganic filler(s), the proportion of the inorganic filler in the total mass of the first adhesive layer 1A (second adhesive layer 1B) is preferably 80% by mass or less, more preferably 50% by mass or less, and even more preferably 30% by mass or less.

In a preferred embodiment, the first adhesive layer 1A is composed of an adhesive layer that exhibits adhesiveness to the positive electrode 22 by contacting the positive electrode 22 facing the first adhesive layer 1A at ordinary temperature (e.g., about 25°C). The second adhesive layer 1B is composed of an adhesive layer that has no adhesiveness to the positive electrode 22 when the first adhesive layer 1A adheres to the facing positive electrode 22, but thereafter exhibits adhesiveness to the positive electrode 22 when some physical process or means is applied. Examples of such a physical process here include heating, pressurization, irradiation with energy such as light, and combinations thereof. The pressure in such pressurization is, for example, 0.1 MPa or higher, preferably 1 MPa or higher, and may be, for example, 5 MPa or lower. The temperature in such heating is, for example, 50°C or higher, preferably 70°C or higher, and may be, for example, 80°C or lower. The energy in such energy irradiation can be, for example, 1 J/sec to 20 J/sec. The second adhesive layer 1B can be said to be an adhesive layer that is configured not to have adhesiveness to the extent that it contacts the first electrode (here, the positive electrode 22) at ordinary temperature, for example, but to cause the separator 26 to adhere to the first electrode (here, the positive electrode 22) through heating, warming, or irradiation with energy such as light, as described above. Meanwhile, the first adhesive layer 1A can be said to be an adhesive layer that is configured to cause the separator 26 to adhere to the first electrode (here, the positive electrode 22), for example, by contacting the first electrode (here, the positive electrode 22) (for example, through the contact at a pressing force of about 0.01 MPa to 0.1 MPa) at ordinary temperature. Although not particularly limited, a 90° peel strength between the first adhesive layer 1A and the positive electrode 22 when the first adhesive layer 1A contacts the facing first electrode (here, the positive electrode 22) at ordinary temperature can be, for example, 0.00001 N/20mm to 0.1 N/20mm (preferably 0.0001 N/20mm to 0.01 N/20mm). The 90° peel strength between the second adhesive layer 1B and the first electrode (here, the positive electrode 22) when some physical process is applied can be, for example, 0.00001 N/20mm to 0.1 N/20mm (preferably, 0.0001 N/20mm to 0.06 N/20mm). Examples of the resin constituting such a first adhesive layer 1A include PVdF, SBR, and acrylic resins, and examples of the resin constituting the second adhesive layer 1B include acrylic resins and epoxy resins.

In a preferred embodiment, the first adhesive layer 1A has adherence under the temperature condition in the winding step. Such a configuration is preferred because the separator 26 and positive electrode 22 can easily adhere to each other in the winding step. The second adhesive layer 1B can also have adherence under the temperature condition in the winding step.

In a preferred embodiment, in the winding step, the first adhesive layer 1A and the first electrode (here, the positive electrode 22) adhere to each other, and the second adhesive layer 1B and the first electrode (here, the positive electrode 22) adhere to each other with a force weaker than an adhesive force between the first adhesive layer 1A and the first electrode (here, the positive electrode 22), or the second adhesive layer 1B and the first electrode (here, the positive electrode 22) do not adhere to each other. In the pressing step, the second adhesive layer 1B and the first electrode (here, the positive electrode 22) adhere to each other more strongly than in a state prior to the pressing step. Although not particularly limited, the difference in the peel strength of the second adhesive layer 1B before and after the pressing step can be, for example, 0.00001 N/20mm to 0.1 N/20mm (preferably, 0.0001 N/20mm to 0.06 N/20mm).

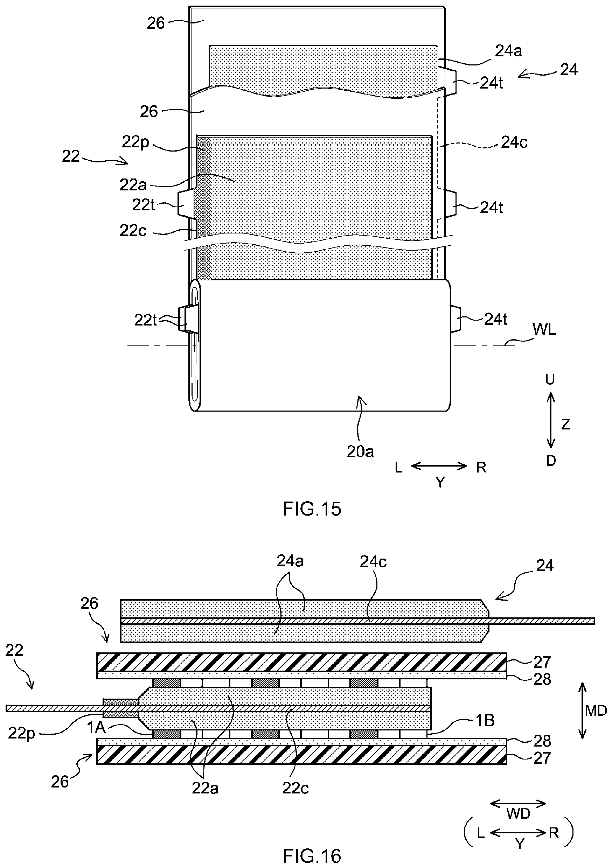

Next, as illustrated in FIG. 2, the separators 26, the positive electrode 22, and the negative electrode 24 that have been prepared in the way above are transported to the winding core B using a transport roller A, and wound onto the winding core B to produce the wound body 20A. Although a cylindrical core is used as the winding core B here, the winding core B is not limited to this, and a flat-shaped core may be used, for example. The cross-sectional shape of the wound body 20A may be flat as in the present embodiment, or may be other shapes such as a perfect circle, an ellipse, or a track shape. The respective sheets are wound such that only positive electrode tabs 22t of the positive electrode 22 protrude from one side edge thereof (left side in FIG. 15) in the width direction Y, and only negative electrode tabs 24t of the negative electrode 24 protrude from the other side edge thereof (right side in FIG. 15). The number of turns in the winding of the sheet is preferably adjusted as appropriate in consideration of the performance of the target battery 100, its manufacturing efficiency, and the like. In some embodiments, such a number of turns in the winding can be 20 or more or 30 or more.

As illustrated in FIG.5, in the present embodiment, the first adhesive layer 1A is formed in a predetermined pattern (formed in a predetermined shape), and the second adhesive layer 1B is formed in a predetermined pattern (formed in a predetermined shape). In the present embodiment, the first adhesive layer 1A is partially formed, and the second adhesive layer 1B is partially formed. Such a configuration is preferred because the effects of the technology disclosed herein can be obtained more easily (and more effectively). As illustrated in FIG.5, in the present embodiment, such a pattern is dot-shaped (here, has circular dots in the plan view of the separator 26). And in the present embodiment, the first and second adhesive layers 1A and 1B are arranged alternately in a short side direction Y of the separator 26. In the present embodiment, the number of such dots is six in the Y direction of the separator 26, but is not limited thereto, and the number of dots is preferably changed as appropriate depending on the compositions of the first adhesive layer 1A and the second adhesive layer 1B, and the like. In other embodiments, such a pattern may be dot-shaped such that it has dots with a shape other than a circle in the plan view of the separator 26 (e.g., an oval shape, a polygonal shape, etc. in the plan view of the separator 26), or it can have a stripe shape, a track shape, or the like. As such a pattern, one of the shapes described above may be formed, or a combination of two or more of them may be formed. As an example of other patterns, patterns such as those in the second through fifth embodiments described later may be embodied. In another embodiment, the first and second adhesive layers 1A and 1B may be arranged alternately in a long side direction Z of the separator 26.

As illustrated in FIGS. 5 and 6, in the present embodiment, the first adhesive layer 1A and the second adhesive layer 1B are each formed in a dot shape with circular dots in the plan view of the separator 26, and the diameter of a dot (i.e., dot diameter) D1 of the first adhesive layer 1A is smaller than the diameter of a dot (i.e., dot diameter) D2 of the second adhesive layer 1B. With such a configuration, after the pressing step described later, variations in the volume of a single dot between the first adhesive layer 1A and the second adhesive layer 1B become smaller, which can suitably suppress the non-uniformity of the reaction in the battery 100. Although not particularly limited, the value of the ratio of the D1 to the D2, (D1/D2), is, for example, 0.1 or more, preferably 0.3 or more, and more preferably 0.5 or more from the viewpoint of more suitably obtaining the effects described above. The upper limit of the value of the ratio (D1/D2) is, for example, 0.8 or less, and may be 0.6 or less. Although not particularly limited, the size of each of the dot diameters D1 and D2 is, for example, 50 µm or more, more preferably 75 µm or more, and even more preferably 100 µm or more. The upper limit of each of the dot diameters D1 and D2 is, for example, 500 µm or less, preferably 300 µm or less, and more preferably 200 µm or less. That is, the size of each of the dot diameters D1 and D2 is preferably within the range of 50 µm to 500 µm, for example. In other embodiments, the dot diameter D1 and the dot diameter D2 may be the same, or the dot diameter D1 may be greater than the dot diameter D2.

As illustrated in FIG. 6, in the present embodiment, a thickness T1 of the first adhesive layer 1A (specifically, the thickness in a MD direction of FIG. 6) is substantially the same as a thickness T2 of the second adhesive layer 1B (specifically, the thickness in the MD direction of FIG. 6). However, in other embodiments, the thickness T1 of the first adhesive layer 1A may be greater than the thickness T2 of the second adhesive layer 1B. Although not particularly limited, a value of the ratio of the T1 to the T2, (T1/T2), is, for example, 1.2 or more, and from the viewpoint of more suitably obtaining the effect described above, it is preferably 1.5 or more (e.g., more than 1.5), and more preferably 2 or more (e.g., more than 2). The upper limit of the value of the ratio (T1/T2) is, for example, 3 or less, and may be 2.5 or less. Although not particularly limited, the magnitude of each of the T1 and T2 is preferably 0.1 µm or more, more preferably 0.2 µm or more, and even more preferably 0.5 µm or more. The upper limit of the magnitude of each of the T1 and T2 is preferably 10 µm or less, more preferably 5 µm or less, and even more preferably 3 µm or less. The T1 and T2 being within the above respective ranges are preferred from the viewpoint of adhesiveness, uniformity of a charge-discharge reaction in the battery 100, suppression of Li deposition, and the like. The magnitude of each of the T1 and T2 is preferably within the range of 0.1 µm to 10 µm, for example.

Although not particularly limited, the value of the ratio (Q/P) of the total formed area Q of the first adhesive layer 1A on one surface of the separator 26 to the area P of the one surface of the separator 26 is, for example, 0.005 or more. From the viewpoint of suitably ensuring the adhesiveness between the separator 26 and the positive electrode 22, it is preferably 0.01 or more, and more preferably 0.03 or more, or may be, for example, 0.05 or more. The upper limit of the value of the ratio (Q/P) is, for example, 0.5 or less. From the viewpoint of obtaining the battery 100 which has its resistance suitably reduced (in other words, the battery 100 in which a reduction in the output characteristics is suitably suppressed), it is preferably 0.3 or less, more preferably 0.2 or less, or even more preferably 0.1 or less. The value of the ratio (Q/P) is preferably within a range of 0.01 to 0.3, for example. Although not particularly limited, the value of the ratio (R/P) of the total formed area R of the second adhesive layer 1B on one surface of the separator 26 to the area P of the one surface of the separator 26 is, for example, 0.005 or more. From the viewpoint of suitably ensuring the adhesiveness between the separator 26 and the positive electrode 22, it is preferably 0.01 or more, and more preferably 0.03 or more, or may be, for example, 0.05 or more. The upper limit of the value of the ratio (R/P) is, for example, 0.5 or less. From the viewpoint of obtaining the battery 100 which has its resistance suitably reduced (in other words, the battery 100 in which a reduction in the output characteristics is suitably suppressed), it is preferably 0.3 or less, more preferably 0.2 or less, or even more preferably 0.1 or less. The value of the ratio (R/P) is preferably within a range of 0.01 to 0.3, for example. The total formed area of the first adhesive layer 1A (second adhesive layer 1B) means an area of the whole first adhesive layer 1A (second adhesive layer 1B) in the plan view of the separator 26.

As illustrated in FIG. 6, in the present embodiment, the total formed area Q of the first adhesive layer 1A is smaller than the total formed area R of the second adhesive layer 1B. With such a configuration, in the winding step, the first and second adhesive layers 1A and 1B and the positive electrode 22 adhere to each other weakly, whereas in the pressing step, the first and second adhesive layers 1A and 1B and the positive electrode 22 adhere to each other strongly, which is preferred from the viewpoint of suitably obtaining the effects of the technology disclosed herein. In addition, with such a configuration, the uniformity of the charge-discharge reaction in the battery 100 can be suitably achieved. Although not particularly limited, the value of the ratio (Q/R) of the Q to the R is, for example, 0.1 or more. From the viewpoint of more suitably obtaining the effects described above, it is preferably 0.2 or more, and more preferably 0.3 or more. The upper limit of the value of the ratio (Q/R) is, for example, 0.7 or less, or may be 0.5 or less. In other embodiments, the total formed area Q of the first adhesive layer 1A and the total formed area R of the second adhesive layer 1B may be the same, or the total formed area Q of the first adhesive layer 1A may be smaller than the total formed area R of the second adhesive layer 1B.

Although not particularly limited, the basis weight of the first adhesive layer 1A on one surface of the separator 26 is, for example, 0.005 g/m² or more, preferably 0.01 g/m² or more, and more preferably 0.02 g/m² or more. The upper limit of the basis weight of the first adhesive layer 1A is, for example, 2.0 g/m² or less, preferably 1.0 g/m² or less, and more preferably 0.05 g/m² or less. Although not particularly limited, the basis weight of the second adhesive layer 1B on the one surface of the separator 26 is, for example, 0.005 g/m² or more, preferably 0.01 g/m² or more, and more preferably 0.02 g/m² or more. The upper limit of the basis weight of the second adhesive layer 1B is, for example, 2.0 g/m² or less, preferably 1.0 g/m² or less, and more preferably 0.05 g/m² or less. The term "basis weight" refers to a value obtained by dividing the mass of the adhesive layer by the area of its formed region (mass of adhesive layer/area of its formed region).

### (Step S2: Winding Step)

As described above, in the present step, the wound body 20A obtained in the winding step is pressed to form the wound electrode body 20a having a flat shape. Here, FIG. 3 is a schematic diagram illustrating the wound body 20A prior to the pressing according to the present embodiment. FIG. 4 is a schematic diagram illustrating the wound body 20A after the pressing according to the present embodiment. First, as illustrated in FIG. 3, the wound body 20A is placed in a press machine C having a pair of pressing surfaces opposed to each other, and then pressed in the direction of a white arrow to obtain the wound electrode body 20a having a flat shape. Here, the pressing pressure can be in the range of 0.1 MPa to 20 MPa (preferably 5 MPa to 10 MPa), for example. Such pressing may be either pressing without heating or heated pressing. In the case of the heated pressing, the heating temperature can be in the range of 50°C to 100°C (preferably 70°C to 90°C), for example. The flat-shaped wound electrode body 20a after the press forming has a pair of curved portions 20r, each having a curved outer surface, and flat portions 20f, each having a flat outer surface connecting the pair of curved portions 20r. Although not shown, the flat-shaped wound electrode body 20a obtained after the press forming has, at one end thereof in the width direction Y, a positive electrode tab group 23 of the stacked positive electrode tabs 22t, and at the other end thereof, a negative electrode tab group 25 of the stacked negative electrode tabs 24t. A core portion in which a positive-electrode active material layer 22a and a negative-electrode active material layer 24a face each other is formed at the center of the wound electrode body in the width direction Y The surface layer of the separator 26 and the positive electrode 22 (negative electrode 24) can adhere to each other by the press forming.

Here, FIG. 8 is a schematic diagram illustrating a state of the separator 26 after the pressing step according to the present embodiment. As illustrated in FIG. 8, in the pressing step, the second adhesive layer 1B and the positive electrode 22 adhere to each other more strongly than in the state prior to the pressing step. Thus, since the separator 26 and the positive electrode 22 adhere to each other using the second adhesive layer 1B in the pressing step, an increase in the thickness of the wound electrode body 20a after the pressing step can be suitably suppressed. That is, the insertability of the wound electrode body 20a into a battery case 10 can be suitably improved.

The thickness t1 of the first adhesive layer 1A and the thickness t2 of the second adhesive layer 1B after the pressing step are preferably substantially the same. A dot diameter d1 of the first adhesive layer 1A and a dot diameter d2 of the second adhesive layer 1B after the pressing step are preferably substantially the same. The volume of the first adhesive layer 1A and the volume of the second adhesive layer 1B after the pressing step are preferably substantially the same. With such a configuration, the resistance of the battery 100 can be suitably reduced.

Although not illustrated, in the present embodiment, the separator 26 is arranged on the outermost surface of the wound electrode body 20a after the press forming, and the shape of the wound electrode body 20a is maintained by attaching a winding stopper tape to the end of the winding of such a separator 26. As the winding stopper tape, any conventionally known tape used for wound electrode bodies can be used without any particular restrictions. Although not illustrated, in the present embodiment, the end of the winding of the positive electrode 22 is arranged at the curved portion 20r of the electrode body 20a. In the above manner, the electrode bodies 20a, 20b, and 20c according to the present embodiment can be produced.

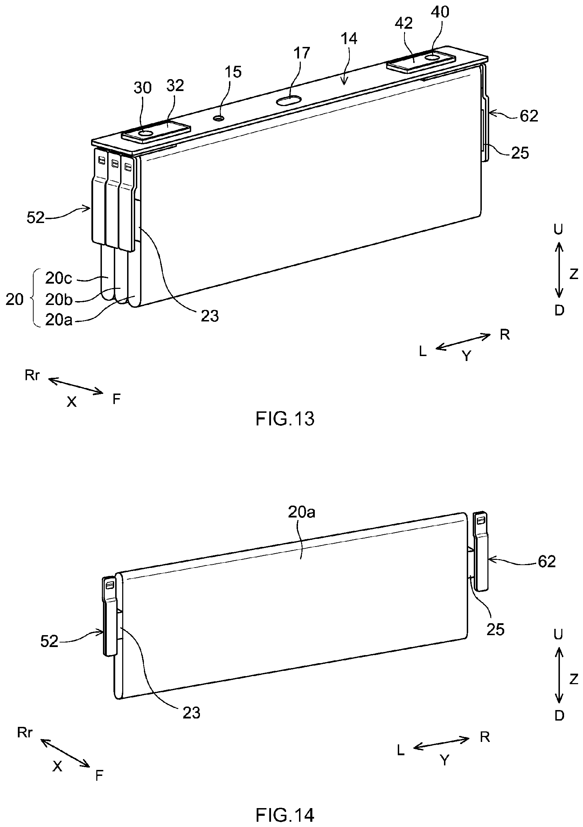

Next, an electrode body group 20 integrated with a sealing plate 14 is produced. Specifically, first, as illustrated in FIG. 14, three wound electrode bodies 20a, each being equipped with a positive-electrode second current collector 52 and a negative-electrode second current collector 62, are prepared, and they are arranged side by side in the short side direction X as the wound electrode bodies 20a, 20b, and 20c. At this time, all the wound electrode bodies 20a, 20b, and 20c may be arranged in parallel such that the positive-electrode second current collector 52 is arranged on one side in the long side direction Y (on the left side in FIG. 13), and the negative-electrode second current collector 62 is arranged on the other side in the long side direction Y (on the right side in FIG. 13).

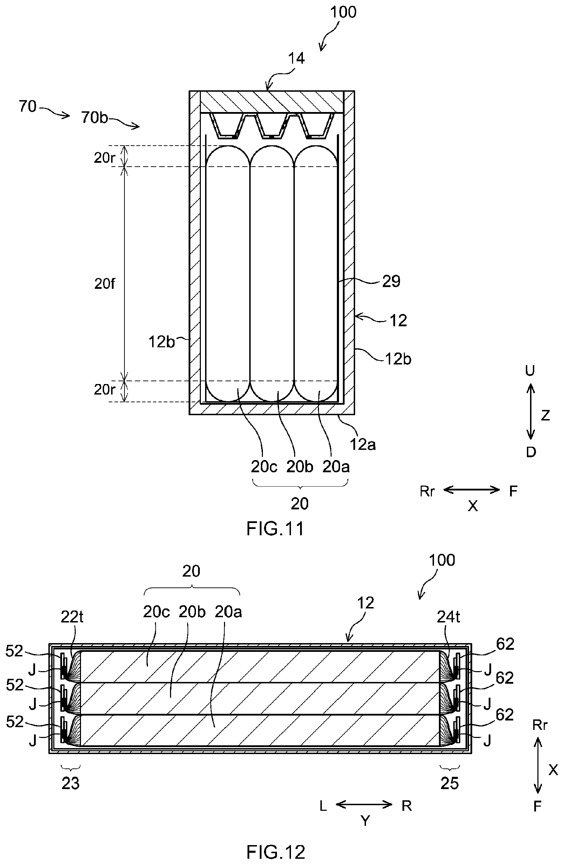

Next, with the positive electrode tabs 22t curved as illustrated in FIG. 12, a positive-electrode first current collector 51 fixed to the sealing plate 14 is joined to each of the positive-electrode second current collectors 52 of the wound electrode bodies 20a, 20b, and 20c. With the negative electrode tabs 24t curved, a negative-electrode first current collector 61 fixed to the sealing plate 14 is joined to each of the negative-electrode second current collectors 62 of the wound electrode bodies 20a, 20b, and 20c. Examples of joining methods suitable for use include ultrasonic welding, resistance welding, laser welding, and the like. In particular, it is preferable to use welding through irradiation of high-energy rays such as laser. Such a welding step forms joint portions in a recess of the positive-electrode second current collector 52 and in a recess of the negative-electrode second current collector 62.

Subsequently, a composite component produced in the way described above is housed in an internal space of an exterior body 12. Specifically, first, an electrode body holder 29 is prepared by folding an insulating resin sheet made of a resin material such as polyethylene (PE) into a pouch or box shape. Next, the electrode body group 20 is housed in the electrode body holder 29. The electrode body group 20 covered by the electrode body holder 29 is then inserted into the exterior body 12. When the weight of the electrode body group 20 is heavy, generally 1 kg or more, for example, 1.5 kg or more, or even 2 to 3 kg, it is desirable to arrange and insert the electrode body group 20 into the exterior body 12 such that a long sidewall 12b of the exterior body 12 intersects the direction of gravity (with the exterior body 12 oriented laterally).

Finally, the sealing plate 14 is joined to an edge of an opening 12h of the exterior body 12 to seal the opening 12h. The exterior body 12 and the sealing plate 14 are then joined together by welding. The welding joint between the exterior body 12 and the sealing plate 14 can be performed, for example, by laser welding or the like. Thereafter, the electrolyte solution is injected through a pouring hole 15, and the battery 100 is sealed by closing the pouring hole 15 with a sealing member 15a. In the way described above, the battery 100 can be manufactured.

### <Configuration of Battery>

Subsequently, the battery 100 obtained by the method of manufacturing the battery will be described.

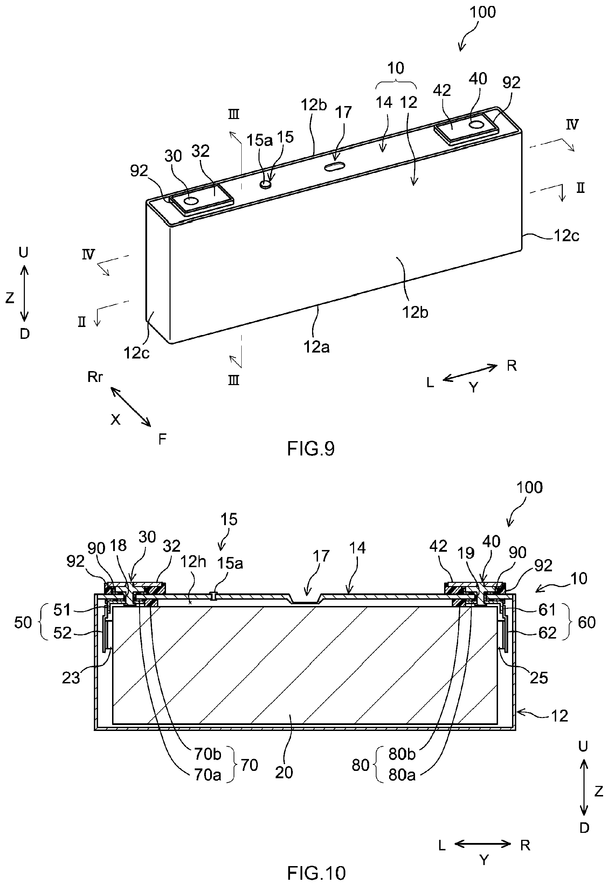

FIG. 9 is a perspective view of the battery 100. FIG. 10 is a schematic longitudinal-sectional view taken along the line II-II in FIG. 9. FIG. 11 is a schematic longitudinal-sectional view taken along the line III-III in FIG. 9. FIG. 12 is a schematic cross-sectional view along the line IV-IV in FIG. 9. In the following description, reference characters L, R, F, Rr, U, and D in the figures represent the left, right, front, rear, up, and down, respectively, and reference characters X, Y, and Z in the figures represent the short side direction, the long side direction orthogonal to the short side direction, and the vertical direction of the battery 100, respectively. However, these characters are only for convenience of explanation and do not limit the installation configuration of the battery 100 in any way.

As illustrated in FIG. 10, the battery 100 includes the battery case 10 and the electrode body group 20. In addition to the battery case 10 and the electrode body group 20, the battery 100 according to the present embodiment also includes a positive electrode terminal 30, a positive-electrode external conductive member 32, a negative electrode terminal 40, a negative-electrode external conductive member 42, an external insulating member 92, a positive electrode current collector 50, a negative electrode current collector 60, a positive-electrode internal insulating member 70, and a negative-electrode internal insulating member 80. Although not illustrated, the battery 100 according to the present embodiment further includes the electrolyte solution. The battery 100 here is a lithium-ion secondary battery.

The battery case 10 is a housing that houses the electrode body group 20. The battery case 10 here has a flat and bottomed cuboid-shaped (square) appearance. The material of the battery case 10 may be the same as that conventionally used, and is not particularly limited. The battery case 10 is preferably made of metal having a predetermined strength. Examples of the metal material constituting the battery case 10 include aluminum, aluminum alloy, iron, iron alloy, and the like.

The battery case 10 includes the exterior body 12, the sealing plate 14, and a gas discharge valve 17. The exterior body 12 is a flat rectangular container with the opening 12h on its one surface. Specifically, as illustrated in FIG. 9, the exterior body 12 has a bottom wall 12a having a substantially rectangular shape, a pair of second side walls 12c extending upward as denoted by U from the short side of the bottom wall 12a and opposed to each other, and a pair of first side walls 12b extending upward as denoted by U from a long side of the bottom wall 12a and opposed to each other. The area of the second side wall 12c is smaller than the area of the first side wall 12b. The opening 12h is formed on a top surface of the exterior body 12 surrounded by the pair of first side walls 12b and the pair of second side walls 12c. The sealing plate 14 is attached to the exterior body 12 so as to close the opening 12h of the exterior body 12. The sealing plate 14 is a plate having a substantially rectangular shape in plan view. The sealing plate 14 is opposed to the bottom wall 12a of the exterior body 12. The battery case 10 is formed by joining (e.g., welding) the sealing plate 14 to the periphery of the opening 12h of the exterior body 12. The joining of the sealing plate 14 can be performed by welding, such as laser welding, for example. Specifically, each of the pair of second side walls 12c is joined to the short side of the sealing plate 14, while each of the pair of first side walls 12b is joined to the long side of the sealing plate 14.

As illustrated in FIGS. 9 and 10, the gas discharge valve 17 is formed on the sealing plate 14. The gas discharge valve 17 is configured to open when the pressure inside the battery case 10 becomes a predetermined value or higher and to discharge gas in the battery case 10. The gas discharge valve 17 in the present embodiment is a recess having a substantially circular shape in plan view that is depressed from the outer surface of the sealing plate 14 toward the electrode body group 20 side. The bottom of such a gas discharge valve 17 has a thin portion that is thinner than the sealing plate 14. The thin portion of the gas discharge valve 17 ruptures when the pressure inside the case becomes the predetermined value or higher. This allows the gas inside the battery case 10 to be discharged to the outside, thereby reducing the elevated internal pressure inside the case.

In addition to the gas discharge valve 17, the sealing plate 14 is provided with the pouring hole 15 and two terminal insertion holes 18 and 19. The pouring hole 15 communicates with the internal space of the exterior body 12 and is an opening provided for pouring the electrolyte solution in the manufacturing process of the battery 100. The pouring hole 15 is sealed by the sealing member 15a. For example, a blind rivet is suitable as the sealing member 15a. This allows the sealing member 15a to be firmly fixed inside the battery case 10. The terminal insertion holes 18 and 19 are respectively formed at both ends of the sealing plate 14 in the long side direction Y, with one terminal insertion hole at each end. The terminal insertion holes 18 and 19 penetrate the sealing plate 14 in the vertical direction Z. As illustrated in FIG. 10, the positive electrode terminal 30 is inserted into the terminal insertion hole 18 on one side (left side) in the long side direction Y The negative electrode terminal 40 is inserted into the terminal insertion hole 19 on the other (right) side in the long side direction Y

FIG. 13 is a perspective view schematically illustrating the electrode body group 20 attached to the sealing plate 14. In the present embodiment, the wound electrode bodies 20a, 20b, and 20c (here, three wound electrode bodies) are housed inside the battery case 10. The number of wound electrode bodies 20 housed inside one battery case 10 is not particularly limited and may be one, or two or more (plural). As illustrated in FIG. 10, the positive electrode current collector 50 is arranged on one side of each electrode body group 20 in the long side direction Y (left side in FIG. 10), and the negative electrode current collector 60 is arranged on the other side of each electrode body group 20 in the long side direction Y (right side in FIG. 10). The respective wound electrode bodies 20a, 20b, and 20c are connected in parallel. However, the wound electrode bodies 20a, 20b, and 20c may be connected in series. The wound electrode body 20 here is housed inside the exterior body 12 of the battery case 10 while being covered with the electrode body holder 29 made of a resin sheet (see FIG. 11).

FIG. 14 is a perspective view schematically illustrating the wound electrode body 20a. FIG. 15 is a schematic diagram illustrating a configuration of the wound electrode body 20a. Here, in FIG. 15, the illustration of the first adhesive layer 1A and the second adhesive layer 1B formed on the surface of the separator 26 is omitted for ease of viewing. The wound electrode body 20a will be described in detail below as an example, but the same configuration can also be used in the wound electrode bodies 20b and 20c.

As illustrated in FIG. 15, the wound electrode body 20a includes the positive electrode 22, the negative electrode 24, and the separator 26. The wound electrode body 20a here is a wound electrode body in which the positive electrode 22 having a strip shape and the negative electrode 24 having a strip shape are stacked via two separators 26 having a strip shape and wound about a winding axis WL.

The wound electrode body 20a has a flat shape. The wound electrode body 20a is arranged inside the exterior body 12 in an orientation in which the winding axis WL is substantially parallel to the long side direction Y Specifically, as illustrated in FIG. 11, the wound electrode body 20a has a pair of curved portions (R portions) 20r facing the bottom wall 12a of the exterior body 12 and the sealing plate 14, and flat portions 20f connecting the pair of curved portions 20r and facing the second side walls 12c of the exterior body 12. The flat portion 20f extends along the second side wall 12c.

The positive electrode 22 has a positive electrode current collector 22c, and the positive-electrode active material layer 22a and a positive electrode protective layer 22p that are affixed onto at least one surface of the positive electrode current collector 22c, as illustrated in FIG. 15. However, the positive electrode protective layer 22p is not essential and can be omitted in other embodiments. The positive electrode current collector 22c is strip-shaped. The positive electrode current collector 22c is made of a conductive metal, such as aluminum, aluminum alloy, nickel, or stainless steel, for example. The positive electrode current collector 22c here is a metal foil, specifically an aluminum foil.

The positive electrode tabs 22t are provided at one end of the positive electrode current collector 22c in the long side direction Y (left end in FIG. 15). The positive electrode tabs 22t are provided at intervals (intermittently) along the longitudinal direction of the strip-shaped positive electrode 22. The positive electrode tabs 22t protrude outwardly from the separator 26 toward one side of the winding axis WL in the axial direction (left side in FIG. 15). The positive electrode tabs 22t may be provided on the other side of the winding axis WL in the axial direction (right side as illustrated in FIG. 15), or may be provided on each of both sides of the winding axis WL in the axial direction. The positive electrode tab 22t is a part of the positive electrode current collector 22c and is made of a metal foil (aluminum foil). However, the positive electrode tab 22t may be a separate member from the positive electrode current collector 22c. At least a part of the positive electrode tab 22t has an area where the positive electrode current collector 22c is exposed and the positive-electrode active material layer 22a and the positive electrode protective layer 22p are not formed.

As illustrated in FIG. 12, the positive electrode tabs 22t are stacked at one end of the winding axis WL in the axial direction (left end in FIG. 12) to constitute the positive electrode tab group 23. The respective positive electrode tabs 22t are bent such that their outer ends are aligned. This allows the battery 100 to be downsized by improving its accommodability in the battery case 10. As illustrated in FIG. 10, the positive electrode tab group 23 is electrically connected to the positive electrode terminal 30 via the positive electrode current collector 50. Specifically, the positive electrode tab group 23 and the positive-electrode second current collector 52 are connected together at a connection portion J (see FIG. 12). The positive-electrode second current collector 52 is electrically connected to the positive electrode terminal 30 via the positive-electrode first current collector 51. The size of each of the positive electrode tabs 22t (length along the long side direction Y and width orthogonal to the long side direction Y, see FIG. 15) can be adjusted as appropriate in consideration of the state of connection to the positive electrode current collector 50, for example, by its formed position or the like. Here, the respective sizes of the positive electrode tabs 22t are made different from each other so that their outer ends are aligned when curved.

As illustrated in FIG. 15, the positive-electrode active material layer 22a is provided in the strip shape along the longitudinal direction of the strip-shaped positive electrode current collector 22c. The positive-electrode active material layer 22a contains a positive electrode active material (e.g., a lithium transition metal composite oxide such as lithium nickel cobalt manganese composite oxide) that can reversibly absorb and release charge carriers. When the total solid content of the positive-electrode active material layer 22a is assumed to be 100% by mass, the positive electrode active material may generally account for 80% by mass or more, typically 90% by mass or more, for example, 95% by mass or more. The positive-electrode active material layer 22a may contain optional components other than the positive electrode active material, such as a conductive material, a binder, and various additive components. As the conductive material, a carbon material such as acetylene black (AB), for example, can be used. As the binder, for example, polyvinylidene fluoride (PVdF) can be used.

The positive electrode protective layer 22p is provided in a boundary portion between the positive electrode current collector 22c and the positive-electrode active material layer 22a in the long side direction Y as illustrated in FIG. 15. The positive electrode protective layer 22p here is provided at one end of the positive electrode current collector 22c in the axial direction of the winding axis WL (left end in FIG. 15). However, the positive electrode protective layer 22p may be provided at both ends in the axial direction. The positive electrode protective layer 22p is provided in a strip shape along the positive-electrode active material layer 22a. The positive electrode protective layer 22p contains an inorganic filler (e.g., alumina). When the total solid content of the positive electrode protective layer 22p is assumed to be 100% by mass, the inorganic filler may generally account for 50% by mass or more, typically 70% by mass or more, for example, 80% by mass or more. The positive electrode protective layer 22p may contain optional components other than the inorganic filler, such as a conductive material, a binder, and various additive components. The conductive material and binder may be the same as those exemplified to be able to be included in the positive-electrode active material layer 22a.

The negative electrode 24 has a negative electrode current collector 24c and the negative-electrode active material layer 24a affixed onto at least one surface of the negative electrode current collector 24c as illustrated in FIG. 15. The negative electrode current collector 24c is strip-shaped. The negative electrode current collector 24c is made of conductive metal, such as copper, copper alloy, nickel, or stainless steel. The negative electrode current collector 24c here is a metal foil, specifically a copper foil.

The negative electrode tabs 24t are provided at one end of the negative electrode current collector 24c in the axial direction of the winding axis WL (right end in FIG. 15). The negative electrode tabs 24t are provided at intervals (intermittently) along the longitudinal direction of the strip-shaped negative electrode 24. Each of the negative electrode tabs 24t protrudes outwardly from the separator 26 toward one side of the negative electrode 24 in the axial direction (right side in FIG. 15). However, the negative electrode tab 24t may be provided at the other end of the negative electrode 24 in the axial direction (left end in FIG. 15) or may be at each of both ends of the negative electrode 24 in the axial direction. The negative electrode tab 24t is part of the negative electrode current collector 24c and is made of a metal foil (copper foil). However, the negative electrode tab 24t may be a separate member from the negative electrode current collector 24c. At least a part of the negative electrode tab 24t has an area where the negative-electrode active material layer 24a is not formed and the negative electrode current collector 24c is exposed.

As illustrated in FIG. 12, the negative electrode tabs 24t are stacked at one end of the negative electrode 24 in the axial direction (right end in FIG. 12) to constitute the negative electrode tab group 25. The negative electrode tab group 25 is preferably provided at a position symmetrical to the positive electrode tab group 23 in the axial direction. The respective negative electrode tabs 24t are bent such that their outer ends are aligned. This allows the battery 100 to be downsized by improving its accommodability in the battery case 10. As illustrated in FIG. 10, the negative electrode tab group 25 is electrically connected to the negative electrode terminal 40 via the negative electrode current collector 60. Specifically, the negative electrode tab group 25 and the negative-electrode second current collector 62 are connected together at the connection portion J (see FIG. 12). The negative-electrode second current collector 62 is electrically connected to the negative electrode terminal 40 via the negative-electrode first current collector 61. As in the positive electrode tabs 22t, the respective sizes of the negative electrode tabs 24t are here made different from each other so that their outer ends are aligned when curved.

As illustrated in FIG. 15, the negative-electrode active material layer 24a is provided in the strip shape along the longitudinal direction of the strip-shaped negative electrode current collector 24c. The negative-electrode active material layer 24a contains a negative electrode active material (e.g., carbon material such as graphite) that can reversibly absorb and release charge carriers. When the total solid content of the negative-electrode active material layer 24a is assumed to be 100% by mass, the negative electrode active material may generally account for 80% by mass or more, typically 90% by mass or more, for example, 95% by mass or more. The negative-electrode active material layer 24a may contain optional components other than the negative electrode active material, such as a binder, a dispersant, and various additive components, for example. As the binder, rubbers such as styrene-butadiene rubber (SBR), for example, may be used. As the dispersant, cellulose and its derivatives such as carboxymethyl cellulose (CMC), for example, may be used.

Subsequently, a description will be given on the separator 26, first adhesive layer 1A, and second adhesive layer 1B which characterize the battery 100 (i.e., the battery 100 including the flat-shaped wound electrode bodies 20a, 20b, and 20c, each of which includes the positive electrode 22 having a strip shape, the negative electrode 24 having a strip shape, and the separator 26 having a strip shape, the positive electrode 22 and the negative electrode 24 being wound with the separator 26 interposed therebetween). As illustrated in FIG. 5, the separator 26 according to the present embodiment has the first adhesive layer 1A and the second adhesive layer 1B on one surface of the separator 26. In the plan view of the separator 26, the first adhesive layer 1A is partially formed, and the second adhesive layer 1B is partially formed. The first adhesive layer 1A is composed of the adhesive layer that exhibits adhesiveness to the positive electrode 22 by contacting the positive electrode 22 facing the first adhesive layer 1A at ordinary temperature (for example, about 25°C), and the second adhesive layer 1B is composed of the adhesive layer that has no adhesiveness to the positive electrode 22 when the first adhesive layer 1A adheres to the facing positive electrode 22, but thereafter exhibits adhesiveness to the positive electrode 22 when some physical process is applied. Such a battery 100 can be said to be a battery that includes the wound electrode bodies 20a, 20b, and 20c obtained with high productivity (in other words, with their costs suitably reduced) because the battery 100 is manufactured by the method of manufacturing a battery as described above. Hereinafter, the separator 26, first adhesive layer 1A, and second adhesive layer 1B will be described.

The separator 26 is a strip-shaped member as illustrated in FIGS. 15 and 5. The separator 26 is an insulating sheet with fine through holes for allowing the charge carriers to pass therethrough. The width of the separator 26 is greater than the width of the negative-electrode active material layer 24a. By interposing the separator 26 between the positive electrode 22 and the negative electrode 24, the contact between the positive electrode 22 and the negative electrode 24 is prevented, and charge carriers (e.g., lithium ions) can be moved between the positive electrode 22 and the negative electrode 24. Although not particularly limited, the thickness of the separator 26 (length in the stacking direction MD in FIG. 16; the same applies hereinafter) is preferably 3 µm or more, and more preferably 5 µm or more. The thickness of the separator 26 is preferably 25 µm or less, more preferably 18 µm or less, and even more preferably 14 µm or less.

Two separators 26 are used here in one wound electrode body 20a. The two separators 26, i.e., a first separator and a second separator, are preferably included in one wound electrode body 20a as in the present embodiment. The two separators 26 have the same configuration here, but may have different configurations.

Here, FIG. 16 is an enlarged diagram schematically illustrating interfaces between the positive electrode 22 and the separator 26 and between the negative electrode 24 and the separator 26 according to the present embodiment. As illustrated in FIG. 16, the separator 26 according to the present embodiment has a base material layer 27 and a heat resistant layer 28 (HRL) provided on one surface of the base material layer 27. The first adhesive layer 1A and the second adhesive layer 1B are present on the surface of the heat resistant layer 28.

As the base material layer 27, a microporous membrane used for battery separators known in the prior art can be used without any particular restrictions. The base material layer 27 is preferably a porous sheet-shaped member. The base material layer 27 may have a single-layer structure or a structure of two or more layers, for example, a structure of three layers. The base material layer 27 is preferably made of polyolefin resin. The entire base material layer 27 is more preferably made of polyolefin resin. The base material layer 27 is preferably a microporous membrane made of polyethylene, for example. This sufficiently ensures the flexibility of the separator 26 and can facilitate the production (winding and press forming) of the wound electrode body 20a. As the polyolefin resin, polyethylene (PE), polypropylene (PP), or a mixture thereof is preferable, and PE is even more preferable.

Although not particularly limited, the thickness of the base material layer 27 (length in the stacking direction MD; the same applies hereinafter) is preferably 3 µm or more, and more preferably 5 µm or more. The thickness of the base material layer 27 is preferably 25 µm or less, more preferably 18 µm or less, and even more preferably 14 µm or less. The air permeability of the base material layer 27 is preferably 30 sec/100cc to 500 sec/100cc, more preferably 30 sec/100cc to 300 sec/100cc, and even more preferably 50 sec/100cc to 200 sec/100cc.

The heat resistant layer 28 is provided on top of the base material layer 27. The heat resistant layer 28 is preferably formed on top of the base material layer 27. The heat resistant layer 28 may be provided directly on the surface of the base material layer 27 or may be provided over the base material layer 27 via another layer. The heat resistant layer 28 is preferably formed on one or both surfaces of the base material layer 27. However, the heat resistant layer 28 is not essential and may be omitted in other embodiments. The heat resistant layer 28 here is provided on the entire surface of the base material layer 27 facing the positive electrode 22. This can more reliably suppress thermal contraction of the separator 26 and contribute to improving the safety of the battery 100. The basis weight of the heat resistant layer 28 here is uniform in the longitudinal direction LD of the separator 26 and the winding axis direction WD. Although not particularly limited, the thickness of the heat resistant layer 28 (length in the stacking direction MD; the same applied hereinafter) is preferably 0.3 µm or more, more preferably 0.5 µm or more, and even more preferably 1 µm or more. The thickness of the heat resistant layer 28 is preferably 6 µm or less, and more preferably 4 µm or less. The heat resistant layer 28 preferably contains an inorganic filler and a heat-resistant layer binder.

As the inorganic filler, those conventionally known and used for this type of application can be used without any particular restrictions. The inorganic filler preferably contains insulating ceramic particles. Of them, when taking into consideration heat resistance, availability, or the like, inorganic oxides such as alumina, zirconia, silica, and titania, metal hydroxides such as aluminum hydroxide, and clay minerals such as boehmite are preferable, and alumina and boehmite are more preferable. In particular, a compound containing aluminum is preferable from the viewpoint of suppressing thermal contraction of the separator 26. The proportion of the inorganic filler in the total mass of the heat resistant layer 28 is preferably 85% by mass or more, more preferably 90% by mass or more, and even more preferably 95% by mass or more.

As the heat-resistant layer binder, those conventionally known and used for this type of application can be used without any particular restrictions. Specific examples thereof include acrylic resins, fluorine resins (e.g., PVdF), epoxy resins, urethane resins, ethylene vinyl acetate resin, and the like. Of them, acrylic resins are preferable.

The first adhesive layer 1A and the second adhesive layer 1B are provided on the surface facing the positive electrode 22 and are in contact with the positive electrode 22. The first adhesive layer 1A and the second adhesive layer 1B are preferably formed at least on the positive electrode 22 side surface of the separator 26 as illustrated in FIG. 16. The first adhesive layer 1A and the second adhesive layer 1B here are provided over the heat resistant layer 28. The first adhesive layer 1A and the second adhesive layer 1B are preferably formed over the heat resistant layer 28. The first adhesive layer 1Aand the second adhesive layer 1B may be provided directly on the surface of the heat resistant layer 28 or may be provided over the heat resistant layer 28 via another layer. The first adhesive layer 1A and the second adhesive layer 1B may be provided directly on the surface of the base material layer 27 or may be provided over the base material layer 27 via a layer other than the heat resistant layer 28. The first adhesive layer 1A and the second adhesive layer 1B can be layers that have a relatively higher compatibility with the electrolyte solution than, for example, the heat resistant layer 28, and which absorb the electrolyte solution to swell. Although not particularly limited, the thickness of each of the first adhesive layer 1A and the second adhesive layer 1B in the wound electrode body 20a (i.e., each of the lengths in the stacking direction MD in FIG. 16, corresponding to t1 and t2 in FIG. 8; the same applies hereinafter) is preferably 0.1 µm or more, more preferably 0.2 µm or more, and even more preferably 0.5 µm or more. The thickness of each of the first adhesive layer 1A and the second adhesive layer 1B is preferably 10 µm or less, more preferably 5 µm or less, and even more preferably 3 µm or less. That is, the thickness of each of the first adhesive layer 1A and the second adhesive layer 1B in the wound electrode body 20a is preferably in the range of, for example, 0.1 µm to 10 µm. By setting the thickness within such a range, the adhesiveness of the first adhesive layer A and the second adhesive layer 1B, the uniformity of the charge-discharge reaction in the battery 100, the suppression of Li deposition, and the like can be suitably achieved.

As for the partial formation (pattern formation) or the like of the first adhesive layer 1A and second adhesive layer 1B in the separator 26, it is recommended to refer to the corresponding sections in <Method of Manufacturing Battery>.

As for the kinds of resins and the like constituting the first adhesive layer 1A and second adhesive layer 1B, it is recommended to refer to the corresponding sections in <Method of Manufacturing Battery>.

In a preferred embodiment, the value of the ratio (Q/P) of the total formed area Q of the first adhesive layer 1A on one surface of the separator 26 to the area P of the one surface of the separator 26 is, for example, 0.01 to 0.3. The value of the ratio (R/P) of the total formed area R of the second adhesive layer 1B on one surface of the separator 26 to the area P of the one surface of the separator 26 is, for example, 0.01 to 0.3. As for the details of the ratio (Q/P) and ratio (R/P), the corresponding sections in <Method of Manufacturing Battery> can be referred to.

In a preferred embodiment, the total formed area Q of the first adhesive layer 1A is smaller than the total formed area R of the second adhesive layer 1B. As for the details of the ratio (R/Q), the corresponding section in <Method of Manufacturing Battery> can be referred to.

As described above, in the plan view of the separator 26, the first adhesive layer 1A is partially formed, and the second adhesive layer 1B is partially formed. In a preferred embodiment, the first adhesive layer 1A and the second adhesive layer 1B are formed in a predetermined pattern. As for the shape or the like of the pattern, the corresponding section in <Method of Manufacturing Battery> can be referred to.

In a preferred embodiment, the first adhesive layer 1A and the second adhesive layer 1B are each formed in a plurality of dots. A diameter D1 of the dot of the first adhesive layer 1A is smaller than a diameter D2 of the dot of the second adhesive layer 1B. As for the details of the ratio (D1/D2), the corresponding section in <Method of Manufacturing Battery> can be referred to.

The electrolyte solution may be the same as that used in the prior art without any particular restrictions. The electrolyte solution is, for example, a non-aqueous electrolyte solution containing a non-aqueous solvent and a supporting salt. The non-aqueous solvent contains carbonates, such as ethylene carbonate, dimethyl carbonate, and ethyl methyl carbonate, for example. The supporting salt is a fluorine-containing lithium salt, such as LiPF₆. However, the electrolyte solution may be in solid form (solid electrolyte) and integrated with the electrode body group 20.

As illustrated in FIG. 10, the positive electrode terminal 30 is inserted in the terminal insertion hole 18 formed at one end of the sealing plate 14 (left end in FIG. 10) in the long side direction Y The positive electrode terminal 30 is preferably made of metal, more preferably aluminum or aluminum alloy, for example. Meanwhile, the negative electrode terminal 40 is inserted in the terminal insertion hole 19 formed at the other end of the sealing plate 14 (right end in FIG. 10) in the longitudinal direction Y The negative electrode terminal 40 is preferably made of metal, more preferably copper or copper alloy, for example. These electrode terminals (positive electrode terminal 30 and negative electrode terminal 40) here protrude from the same surface of the battery case 10 (specifically, the sealing plate 14). However, the positive and negative electrode terminals 30 and 40 may protrude from different surfaces of the battery case 10. The electrode terminals (positive electrode terminal 30 and negative electrode terminal 40) inserted in the terminal insertion holes 18 and 19, respectively, are preferably fixed to the sealing plate 14 by caulking or the like.

As described above, the positive electrode terminal 30 is electrically connected to the positive electrode 22 of each of the wound electrode bodies 20a, 20b, and 20c (see FIG. 15) via the positive electrode current collector 50 (positive-electrode first current collector 51, and positive-electrode second current collector 52) inside the exterior body 12 as illustrated in FIG. 10. The positive electrode terminal 30 is insulated from the sealing plate 14 by the positive-electrode internal insulating member 70 and a gasket 90. The positive-electrode internal insulating member 70 has a base portion 70a interposed between the positive-electrode first current collector 51 and the sealing plate 14, and a protruding portion 70b protruding from the base portion 70a toward the wound electrode body 20a. The positive electrode terminal 30 exposed to the outside of the battery case 10 through the terminal insertion hole 18 is connected to the positive-electrode external conductive member 32 outside the sealing plate 14. Meanwhile, the negative electrode terminal 40 is electrically connected to the negative electrode 24 of each of the wound electrode bodies 20a (see FIG. 15) via the negative electrode current collector 60 (negative-electrode first current collector 61, and negative-electrode second current collector 62) inside the exterior body 12 as illustrated in FIG. 10. The negative electrode terminal 40 is insulated from the sealing plate 14 by the negative-electrode internal insulating member 80 and the gasket 90. As in the positive-electrode internal insulating member 70, the negative-electrode internal insulating member 80 has a base portion 80a interposed between the negative-electrode first current collector 61 and the sealing plate 14, and a protruding portion 80b protruding from the base portion 80a toward the wound electrode body 20a. The negative electrode terminal 40 exposed to the outside of the battery case 10 through the terminal insertion hole 19 is connected to the negative-electrode external conductive member 42 outside the sealing plate 14. The external insulating member 92 is interposed between an outer surface 14d of the sealing plate 14 and each of the external conductive members (positive-electrode external conductive member 32 and negative-electrode external conductive member 42) described above. The external insulating member 92 can insulate the external conductive members 32 and 42 from the sealing plate 14.

The protruding portions 70b and 80b of the internal insulating members (positive-electrode internal insulating member 70 and negative-electrode internal insulating member 80) described above are arranged between the sealing plate 14 and the wound electrode body 20a. The protruding portions 70b and 80b of the internal insulating members restrict the upward movement of the wound electrode body 20a and thus can prevent contact between the sealing plate 14 and the wound electrode body 20a.

### <Applications of Battery>

The battery 100 is usable for various applications. For example, it can be suitably used as a power source (drive power source) for motors installed in vehicles such as passenger cars and trucks. The type of vehicles is not particularly limited, but examples thereof include plug-in hybrid electric vehicles (PHEV), hybrid electric vehicles (HEV), and electric vehicles (BEV). The battery 100 can be suitably used to construct a battery pack because variations in the battery reaction are reduced.

Although one embodiment of the present disclosure has been described above, the above embodiment is illustrative only. The present disclosure can be implemented in various other embodiments. The present disclosure can be implemented based on the contents disclosed herein and the technical common sense in the field. The technology described in the claims includes various variations and modifications of the embodiments exemplified above. For example, a part of the embodiment can be replaced with other variants, or other variants can be added to the above embodiment. In addition, a technical feature can be deleted as appropriate if that feature is not described as essential.

For example, in the above embodiment, the first adhesive layer 1A and the second adhesive layer 1B are formed on the surface of the separator 26 facing the positive electrode 22, but they are not limited to this position. In other embodiments, the first adhesive layer 1A and the second adhesive layer 1B may be formed on the surface of the separator 26 facing the negative electrode 24. Alternatively, the first adhesive layer 1A and the second adhesive layer 1B may be formed on the surface of the separator 26 facing the positive electrode 22 and the surface of the separator 26 facing the negative electrode 24.

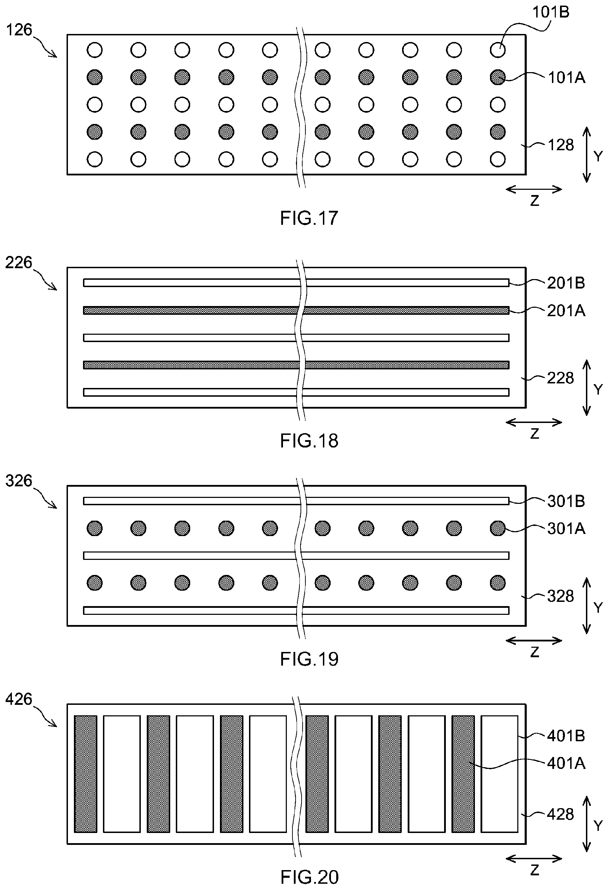

For example, FIG. 17 is a diagram corresponding to FIG. 5, according to a second embodiment. As illustrated in FIG. 17, in the second embodiment, the separator 126 has a dot-shaped pattern, in which each dot is circular in plan view, and the first adhesive layer 101A and the second adhesive layer 101B have the same dot diameter. In addition, the number of first adhesive layers 101A in the separator 126 is set smaller than the number of second adhesive layers 1B therein. Thus, the battery according to the second embodiment may be similar to the battery 100 described above except that the pattern is changed.

For example, FIG. 18 is a diagram corresponding to FIG. 5, according to a third embodiment. As illustrated in FIG. 18, in the third embodiment, a first adhesive layer 201A and a second adhesive layer 201B, which are included in the separator 226, are set to have a linear shape in plan view extending along the longitudinal direction Z of the separator 226. The battery according to the third embodiment may be similar to the battery 100 described above except that the pattern is changed.

For example, FIG. 19 is a diagram corresponding to FIG. 5, according to a fourth embodiment. As illustrated in FIG. 19, in the fourth embodiment, a first adhesive layer 301A and a second adhesive layer 301B, which are included in the separator 326, are formed so as to have the shape in plan view in which lines extending along the longitudinal direction Z of the separator 326 and dots formed along the longitudinal direction Z are alternately formed. With such a configuration, each of the dot-shaped first adhesive layers 301A, spaced apart from each other, adheres to the positive electrode 22 in the winding step, whereas each of the linear second adhesive layers 301B adheres strongly to the positive electrode 22 in the pressing step. The battery according to the fourth embodiment may be similar to the battery 100 described above except that the pattern is changed.

For example, FIG. 20 is a diagram corresponding to FIG. 5, according to a fifth embodiment. As illustrated in FIG. 20, in the fifth embodiment, each of a first adhesive layer 401A and a second adhesive layer 401B, which are included in the separator 426, has a linear shape in plan view that extends along an orthogonal direction Y to the longitudinal direction of the separator 426. The battery according to the fifth embodiment may be similar to the battery 100 described above except that the pattern is changed.

In other embodiments, in the separator 26, the second adhesive layer 1B may be arranged over the entire surface of the separator 26, and the first adhesive layer 1A may be patterned on a part of the surface.

As described above, the specific aspects of the technology disclosed herein are those described in the following respective paragraphs (items).

### Item 1:

An electricity storage device (100) comprising: a wound electrode body (20) having a flat shape, the wound electrode body (20) including a first electrode (22) having a strip shape, a second electrode (24) having a strip shape, and a separator (26) having a strip shape, the first electrode (22) and the second electrode (24) being wound with the separator (26) interposed therebetween,
wherein
the separator (26) has a first adhesive layer (1A) and a second adhesive layer (1B) on at least one surface of the separator (26),
in plan view of the separator (26), the first adhesive layer (1A) is partially formed, and the second adhesive layer (1B) is partially formed,
the first adhesive layer (1A) comprises an adhesive layer that exhibits adhesiveness to the first electrode (22) by contacting the first electrode (22) facing the first adhesive layer (1A) at ordinary temperature, and
the second adhesive layer (1B) comprises an adhesive layer that has no adhesiveness to the first electrode (22) when the first adhesive layer (1A) adheres to the facing first electrode (22), but thereafter exhibits adhesiveness to the first electrode (22) when a physical process is applied.

### Item 2:

The electricity storage device (100) according to item 1, wherein
a value of a ratio (Q/P) of a total formed area Q of the first adhesive layer (1A) to an area P of one surface of the separator (26) is 0.01 to 0.3, and
a value of a ratio (R/P) of a total formed area R of the second adhesive layer (1B) to the area P of the one surface of the separator (26) is 0.01 to 0.3.

### Item 3:

The electricity storage device (100) according to item 1 or 2, wherein the total formed area Q of the first adhesive layer (1A) is smaller than the total formed area R of the second adhesive layer (1B).

### Item 4:

The electricity storage device (100) according to any one of items 1 to 3, wherein
the first adhesive layer (1A) and the second adhesive layer (1B) are each formed in a plurality of dots, and
a diameter of a dot of the first adhesive layer (1A) is smaller than a diameter of a dot of the second adhesive layer (1B).

### Item 5:

A method of manufacturing an electricity storage device (100) including a wound electrode body (20) having a flat shape, the wound electrode body (20) including a first electrode (22) having a strip shape, a second electrode (24) having a strip shape, and a separator (26) having a strip shape, the first electrode (22) and the second electrode (24) being wound with the separator (26) interposed therebetween, the method comprising the steps of:
winding (S 1) the first electrode (22) and the second electrode (24) with the separator (26) interposed therebetween to produce a wound body (20A); and
after the winding step (S1), pressing (S2) the wound body (20A) to form a wound electrode body (20) having a flat shape,
wherein
the separator (26) used in the winding has a first adhesive layer (1A) and a second adhesive layer (1B) on at least one surface of the separator (26),
in plan view of the separator (26), the first adhesive layer (1A) is partially formed, and the second adhesive layer (1B) is partially formed,
a main component of a resin constituting the first adhesive layer (1A) and a main component of a resin constituting the second adhesive layer (1B) are different from each other, and
under a temperature condition in the winding step (S1), adhesiveness of the second adhesive layer (1B) to the first electrode (22) is lower than adhesiveness of the first adhesive layer (1A) to the first electrode (22).

### Item 6:

The method of manufacturing an electricity storage device (100) according to item 5, wherein
the first adhesive layer (1A) comprises an adhesive layer that exhibits adhesiveness to the first electrode (22) by contacting the first electrode (22) facing the first adhesive layer (1A) at ordinary temperature, and
the second adhesive layer (1B) comprises an adhesive layer that has no adhesiveness to the first electrode (22) when the first adhesive layer (1A) adheres to the facing first electrode (22), but thereafter exhibits adhesiveness to the first electrode (22) when a physical process is applied.

### Item 7:

The method of manufacturing an electricity storage device (100) according to item 5 or 6, wherein the winding step (S1) is performed under a condition of 50°C or lower.

### Item 8:

The method of manufacturing an electricity storage device (100) according to any one of items 5 to 7, wherein
in the separator (26) used in the winding step (S1),
a value of a ratio (Q/P) of a total formed area Q of the first adhesive layer (1A) to an area P of one surface of the separator (26) is 0.01 to 0.3, and
a value of a ratio (R/P) of a total formed area R of the second adhesive layer (1B) to the area P of the one surface of the separator (26) is 0.01 to 0.3.

### Item 9:

The method of manufacturing an electricity storage device (100) according to one of items 5 to 8, wherein in the separator (26) used in the winding step (S 1), the total formed area Q of the first adhesive layer (1A) is smaller than the total formed area R of the second adhesive layer (1B).

### Item 10:

The method of manufacturing an electricity storage device (100) according to any one of items 5 to 9, wherein
in the separator (26) used in the winding step (S1),
the first adhesive layer (1A) and the second adhesive layer (1B) are each formed in a plurality of dots, and
a diameter of a dot of the first adhesive layer (1A) is smaller than a diameter of a dot of the second adhesive layer (1B).

## Claims

1. An electricity storage device (100) comprising: a wound electrode body (20) having a flat shape, the wound electrode body (20) including a first electrode (22) having a strip shape, a second electrode (24) having a strip shape, and a separator (26) having a strip shape, the first electrode (22) and the second electrode (24) being wound with the separator (26) interposed therebetween,
wherein
the separator (26) has a first adhesive layer (1A) and a second adhesive layer (1B) on at least one surface of the separator (26),
in plan view of the separator (26), the first adhesive layer (1A) is partially formed, and the second adhesive layer (1B) is partially formed,
the first adhesive layer (1A) comprises an adhesive layer that exhibits adhesiveness to the first electrode (22) by contacting the first electrode (22) facing the first adhesive layer (1A) at ordinary temperature, and
the second adhesive layer (1B) comprises an adhesive layer that has no adhesiveness to the first electrode (22) when the first adhesive layer (1A) adheres to the facing first electrode (22), but thereafter exhibits adhesiveness to the first electrode (22) when a physical process is applied.

2. The electricity storage device (100) according to claim 1, wherein
a value of a ratio (Q/P) of a total formed area Q of the first adhesive layer (1A) to an area P of one surface of the separator (26) is 0.01 to 0.3, and
a value of a ratio (R/P) of a total formed area R of the second adhesive layer (1B) to the area P of the one surface of the separator (26) is 0.01 to 0.3.

3. The electricity storage device (100) according to claim 1 or 2, wherein the total formed area Q of the first adhesive layer (1A) is smaller than the total formed area R of the second adhesive layer (1B).

4. The electricity storage device (100) according to claim 1 or 2, wherein
the first adhesive layer (1A) and the second adhesive layer (1B) are each formed in a plurality of dots, and
a diameter of a dot of the first adhesive layer (1A) is smaller than a diameter of a dot of the second adhesive layer (1B).

5. A method of manufacturing an electricity storage device (100) including a wound electrode body (20) having a flat shape, the wound electrode body (20) including a first electrode (22) having a strip shape, a second electrode (24) having a strip shape, and a separator (26) having a strip shape, the first electrode (22) and the second electrode (24) being wound with the separator (26) interposed therebetween, the method comprising the steps of
winding (S1) the first electrode (22) and the second electrode (24) with the separator (26) interposed therebetween to produce a wound body (20A); and
after the winding step (S1), pressing (S2) the wound body (20A) to form a wound electrode body (20) having a flat shape,
wherein
the separator (26) used in the winding has a first adhesive layer (1A) and a second adhesive layer (1B) on at least one surface of the separator (26),
in plan view of the separator (26), the first adhesive layer (1A) is partially formed, and the second adhesive layer (1B) is partially formed,
a main component of a resin constituting the first adhesive layer (1A) and a main component of a resin constituting the second adhesive layer (1B) are different from each other, and
under a temperature condition in the winding step (S1), adhesiveness of the second adhesive layer (1B) to the first electrode (22) is lower than adhesiveness of the first adhesive layer (1A) to the first electrode (22).

6. The method of manufacturing an electricity storage device (100) according to claim 5, wherein
the first adhesive layer (1A) comprises an adhesive layer that exhibits adhesiveness to the first electrode (22) by contacting the first electrode (22) facing the first adhesive layer (1A) at ordinary temperature, and
the second adhesive layer (1B) comprises an adhesive layer that has no adhesiveness to the first electrode (22) when the first adhesive layer (1A) adheres to the facing first electrode (22), but thereafter exhibits adhesiveness to the first electrode (22) when a physical process is applied.

7. The method of manufacturing an electricity storage device (100) according to claim 5 or 6, wherein the winding step (S1) is performed under a condition of 50°C or lower.

8. The method of manufacturing an electricity storage device (100) according to claim 5 or 6, wherein
in the separator (26) used in the winding step (S1),
a value of a ratio (Q/P) of a total formed area Q of the first adhesive layer (1A) to an area P of one surface of the separator (26) is 0.01 to 0.3, and
a value of a ratio (R/P) of a total formed area R of the second adhesive layer (1B) to the area P of the one surface of the separator (26) is 0.01 to 0.3.

9. The method of manufacturing an electricity storage device (100) according to claim 5 or 6, wherein in the separator (26) used in the winding step (S1), the total formed area Q of the first adhesive layer (1A) is smaller than the total formed area R of the second adhesive layer (1B).

10. The method of manufacturing an electricity storage device (100) according to claim 5 or 6, wherein
in the separator (26) used in the winding step (S1),
the first adhesive layer (1A) and the second adhesive layer (1B) are each formed in a plurality of dots, and
a diameter of a dot of the first adhesive layer (1A) is smaller than a diameter of a dot of the second adhesive layer (1B).
